(19) Europäisches Patentamt
European Patent Office
Office européen des brevets

(11) **EP 4 546 694 A1**

(12) **EUROPEAN PATENT APPLICATION**
published in accordance with Art. 153(4) EPC

(43) Date of publication:
**30.04.2025 Bulletin 2025/18**

(21) Application number: **23884341.1**

(22) Date of filing: **01.08.2023**

(51) International Patent Classification (IPC):
**H04L 5/00** *(2006.01)*    **H04W 52/02** *(2009.01)*

(52) Cooperative Patent Classification (CPC):
**H04L 5/00; H04W 52/02;** Y02D 30/70

(86) International application number:
**PCT/CN2023/110571**

(87) International publication number:
**WO 2024/093402 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211380578**

(71) Applicant: **ZTE Corporation
Shenzhen, Guangdong 518057 (CN)**

(72) Inventors:
• **LIU, Kun
Shenzhen, Guangdong 518057 (CN)**

• **DAI, Bo
Shenzhen, Guangdong 518057 (CN)**
• **YANG, Weiwei
Shenzhen, Guangdong 518057 (CN)**
• **HU, Youjun
Shenzhen, Guangdong 518057 (CN)**
• **CHEN, Mengzhu
Shenzhen, Guangdong 518057 (CN)**
• **XU, Jun
Shenzhen, Guangdong 518057 (CN)**

(74) Representative: **Aipex B.V.
Vestdijk 51
5611 CA Eindhoven (NL)**

(54) **SIGNAL GENERATION METHOD, SIGNAL RECEIVING METHOD, COMMUNICATION DEVICE, AND STORAGE MEDIUM**

(57)    Provided are a signal generation method, a signal receiving method, a communication device, and a storage medium. The signal generation method includes generating a first signal based on a first-type time-domain symbol. In the time domain, the first signal includes at least a first number of first-type time-domain symbols.

Generate a first signal based on a first-type time-domain symbol, where in the time domain, the first signal includes at least a first number of first-type time-domain symbols — S1000

**FIG. 2**

EP 4 546 694 A1

**Description**

This application claims priority to Chinese Patent Application No. 202211380578.5 filed Nov. 4, 2022, the disclosure of which is incorporated herein by reference in its entirety.

TECHNICAL FIELD

The present application relates to the field of communications, particularly a signal generation method, a signal receiving method, a communication device, and a storage medium.

BACKGROUND

Currently, 5G devices may require weekly or even daily charging depending on individual usage time. Generally, a 5G user equipment may consume tens of milliwatts of power in the Radio Resource Control (RRC) idle or inactive state and hundreds of milliwatts of power in the RRC connected state. Therefore, to improve the energy efficiency and enhance the user experience, it is essential to extend the battery life of a user equipment. The power consumption of a user equipment partially depends on the length of the wake-up period of the wake-up signal, such as the paging period, configured for the user equipment. In related technology, to satisfy the power consumption requirements, the extended Discontinuous Reception (eDRX) technology is used to save power; however, this results in high latency of the wake-up signal.

SUMMARY

Embodiments of the present application provide a signal generation method, a signal receiving method, a communication device, and a storage medium to reduce the wake-up signal latency.

In a first aspect, an embodiment of the present application provides a signal generation method. The method includes generating a first signal based on a first-type time-domain symbol. In the time domain, the first signal includes at least a first number of first-type time-domain symbols.

In a second aspect, an embodiment of the present application provides a signal generation method. The method includes receiving a first signal. The first signal is generated based on a first-type time-domain symbol. In the time domain, the first signal includes at least a first number of first-type time-domain symbols.

In a third aspect, an embodiment of the present application provides a communication device. The communication device includes at least one processor and at least one memory for storing at least one program. When executed by the at least one processor, the at least one program causes the at least one processor to perform the signal generation method.

In a fourth aspect, an embodiment of the present application provides a computer-readable storage medium storing a program executable by a processor. When executed by the processor, the program causes the processor to perform the signal generation method.

The signal generation method, signal receiving method, communication device, and storage medium are provided in the embodiments of the present application. By the signal generation method in the embodiment, a first signal is generated based on a first-type time-domain symbol. The first signal includes at least a first number of first-type time-domain symbols in the time domain; therefore, when the first signal is used as a wake-up signal, it is possible to configure a shorter wake-up period for the wake-up signal based on the first-type time-domain symbol. As a result, compared with related technologies, the signal generation method of the embodiment can reduce the wake-up signal latency while satisfying the power consumption requirements of a user equipment.

BRIEF DESCRIPTION OF DRAWINGS

FIG. 1 is a diagram of an environment for implementation of a signal generation method and/or a signal receiving method according to an embodiment of the present application.

FIG. 2 is a flowchart of a signal generation method according to an embodiment of the present application.

FIG. 3 is a diagram of a relationship between a first-type time-domain symbol and a second-type time-domain symbol according to an embodiment of the present application.

FIG. 4 is a diagram of a relationship between a first-type time-domain symbol and a second-type time-domain symbol according to an embodiment of the present application.

FIG. 5 is a diagram of a frequency-hopping pattern for the frequency-hopping sending mode of a first signal according to an embodiment of the present application.

FIG. 6 is a diagram of a frequency-hopping pattern for the frequency-hopping sending mode of a first signal according to an embodiment of the present application.

FIG. 7 is a diagram of generation of a second number of first-type time-domain symbols in a second-type time-domain symbol according to an embodiment of the present application.

FIG. 8 is a flowchart of a signal generation method according to an embodiment of the present application.

FIG. 9 is a flowchart of a signal receiving method according to an embodiment of the present application.

FIG. 10 is a diagram of a communication device according to an embodiment of the present application.

DETAILED DESCRIPTION

The present application will be described in detail in connection with the embodiments and the accompanying drawings, from which the purpose, technical solutions and advantages of the present application will be more apparent. It is to be understood that the embodiments described herein are intended to explain the present application, not to limit the present application.

Although functional modules are divided in device schematic diagrams and logical sequences are illustrated in flowcharts, in some cases, steps illustrated or described may be performed in sequences different from those in divided modules in the device or in the flowcharts. The terms "first", "second" and the like in the description, claims and above drawings of the present application are used to distinguish between similar objects and are not necessarily used to describe a particular order or sequence.

In embodiments of the present application, the term such as "further", "by way of example", or "optionally" indicates example, illustration, or explanation and should not be interpreted as preferable or advantageous over other embodiments or design schemes. The use of the term such as "further", "by way of example", or "optionally" is intended to present the relevant concepts in a certain manner.

To satisfy the battery life requirements, the 3rd Generation Partnership Project (3GPP) considers introducing an ultra-low power wake-up (LP-WUS) mechanism in the Rel-18 standard. This approach involves the use of a separate receiver for receiving low-power wake-up signals that are used to activate the primary wireless device for data transmission and reception. When a UE detects no low-power wake-up signal, the primary receiver remains in a deep sleep state, better reducing the power consumption of the terminal. The power consumption of the UE partly depends on the wake-up period length of the wake-up signal configured for the UE, such as the paging period. To satisfy the power consumption requirements, the eDRX technology is used to save power, resulting in high latency for the wake-up signal.

The eDRX technology was introduced in 3GPP Rel. 13. eDRX features a longer paging period than Discontinuous Reception (DRX), allowing a UE to better conserve power but leading to a longer downlink data latency. In eDRX, relevant modules typically listen to a paging channel according to the DRX cycle only during a paging time window (PTW) to receive downlink traffic. Outside the PTW, the UE remains in a sleep state, not listening to the paging channel and unable to receive downlink traffic. This means that eDRX involves modules constantly turning the receiver on or off. Data can be received when the receiver is on and cannot be received when the receiver is off. The eDRX wake-up period consists two complete periods: the period when the receiver is off and the period the receiver is on.

Based on this, the present application provides a signal generation method, a signal receiving method, a communication device, and a storage medium. The signal generation method of an embodiment includes generating a first signal based on a first-type time-domain symbol. In the time domain, the first signal includes at least a first number of first-type time-domain symbols. By the signal generation method in the embodiment, a first signal is generated based on a first-type time-domain symbol. The first signal includes at least a first number of first-type time-domain symbols in the time domain; therefore, when the first signal is used as a wake-up signal, it is possible to configure a shorter wake-up period for the wake-up signal based on the first-type time-domain symbol. As a result, compared with related technologies, the signal generation method of the embodiment can reduce the wake-up signal latency while satisfying the power consumption requirements of a user equipment.

A detailed description of embodiments of the present application is given hereinafter with reference to drawings.

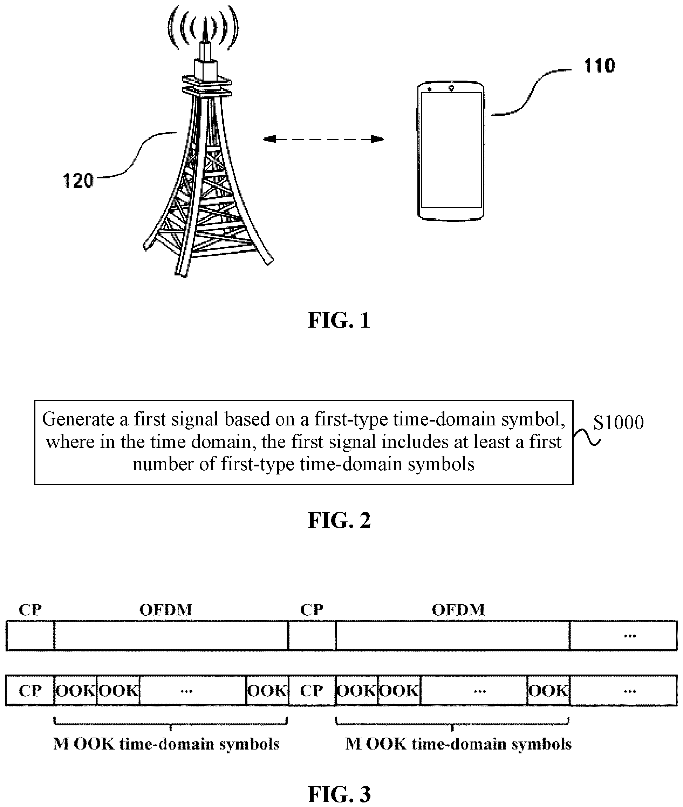

FIG. 1 is a diagram of an environment for implementation of a signal generation method and/or a signal receiving method according to an embodiment of the present application.

In the example of FIG. 1, the implementation environment includes a first signal device 110 and a second signal device 120. Wireless signal transmission and reception can occur between the first signal device 110 and the second signal device 120.

The position of the first signal device 110 relative to the second signal device 120 can be configured according to application scenarios. For example, the first signal device 110 may move along the radiation sphere formed when the second signal device 120 emits signals. In other words, if there are multiple first signal devices 110 configured as described above, they can receive, at different spatial positions, wireless signals sent by the second signal device 120. Notably, these spatial positions can be different regional conditions.

In an embodiment, when the first signal device 110 is a user equipment (UE), the second signal device 120 may be, but is not limited to, a base station. The base station of this embodiment may be an evolved NodeB (eNB), a Transmission Reception Point (TRP), a Next Generation NodeB (gNB) in an NR system, a base station in other future mobile communication systems, or an access point in a Wireless Fidelity (WiFi) system. This embodiment does not limit the technology and form of the signal devices. The UE may also be referred to as an access terminal, user unit, user station, mobile station, mobile terminal, remote station, remote terminal, mobile device, user terminal, wireless communication device, user agent, or user device. For example, the UE may be a cellular phone, cordless phone, Session Initiation Protocol (SIP) phone, Wireless Local Loop (WLL) station, Personal Digital Assistant (PDA), handheld device with wireless communication capabilities, computing device, or another processing device connected to a wireless modem, vehicle-mounted device, wearable device, or terminal device in a 5G network or a future network beyond 5G. This is not limited in this embodiment.

The second signal device 120 has at least the capability to generate a first signal based on a first-type time-domain symbol and to transmit the first signal to the first signal device 110. The first signal includes, in the time domain, at least a first number of first-type time-domain symbols.

The first signal device 110 has at least the capability to receive the first signal sent by the second signal device 120. The first signal is generated based on the first-type time-domain symbol and includes, in the time domain, at least a first number of first-type time-domain symbols.

It is to be noted that the functions of the first signal device 110 and the second signal device 120 can be applied to various application scenarios. This is not limited here.

It is to be understood by those skilled in the art that this implementation environment can be applied to 5G, 6G communication network systems, and subsequent evolving mobile communication network systems. This is not limited in this embodiment.

It is to be understood by those skilled in the art that the implementation environment shown in FIG. 1 does not limit embodiments of the present application. The implementation environment shown in FIG. 1 may include more or fewer components than illustrated, may combine certain components, or may have different component arrangements.

Based on the implementation environment shown in FIG. 1, embodiments of the signal generation method of the present application are presented below.

FIG. 2 is a flowchart of a signal generation method according to an embodiment of the present application. The signal generation method may be applied to not only the second signal device 120 in the implementation environment shown in FIG. 1. The signal generation method may include, but is not limited to, S1000.

In S1000, a first signal is generated based on a first-type time-domain symbol. In the time domain, the first signal includes at least a first number of first-type time-domain symbols.

It is to be noted that the first signal device in this embodiment may include, but is not limited to, a user equipment (UE), and the second signal device in this embodiment may include, but is not limited to, a base station. Alternatively, those skilled in the art may configure the first signal device or the second signal device based on application scenarios. This is not limited in this embodiment. To facilitate the description of the application scenarios and principles of the present application, the first signal device 110 and the second signal device 120 are a UE and a base station respectively by way of example in the following embodiments. This should not be construed as a limitation on embodiments of the present application.

In this step, the base station generates the first signal based on the first-type time-domain symbol and is able to transmit the first signal outward for use by a relevant device. Since the first signal includes at least a first number of first-type time-domain symbols in the time domain, when the relevant device uses the first signal as a wake-up signal, it is feasible to configure a shorter wake-up period for the wake-up signal based on the first-type time-domain symbol. This allows for a reduction in the wake-up signal latency while satisfying the power consumption requirements of the UE.

In an embodiment, when the first signal is used as a wake-up signal, the first-type time-domain symbol may be, but is not limited to, an OOK time-domain symbol, and the first number may be, but is not limited to, P. P is an integer greater than or equal to 1.

In an embodiment, the first-type time-domain symbol is related to a second-type time-domain symbol in at least one of the following manners: the position of a second number of first-type time-domain symbols in the time domain is aligned with the position of one second-type time-domain symbol in the time domain, where the second number is less than or equal to the first number; the length of a second number of first-type time-domain symbols in the time domain is the same as the length of one second-type time-domain symbol in the time domain, where the second number is less than or equal to the first number; or a second number of first-type time-domain symbols are contained in one second-type time-domain symbol, where the second number is less than or equal to the first number.

That is to say, the position, length, or content of the second-type time-domain symbol can represent the occupation condition of a second number of first-type time-domain symbols in the time domain. A known or predetermined second-type time-domain symbol can be used to represent the occupation condition of a second number of first-type time-domain symbols in the time domain, allowing for an accurate presentation of the occupation of a second number of first-type time-domain symbols in the time domain. For example, as shown in FIG. 3, if an OFDM time-domain symbol is used as the second-type time-domain symbol, then the time-domain position of M (which is an integer greater than or equal to 0) OOK time-domain symbols is aligned with one OFDM time-domain symbol, or the time-domain length of M time-domain symbols is the same as that of one OFDM time-domain symbol, or M time-domain symbols are contained in one OFDM time-domain symbol.

In an embodiment, the last one or more first-type time-domain symbols among the second number of first-type time-domain symbols are used as guard intervals. That is to say, no information or no predefined information is sent in the first-type time-domain symbols that serve as the guard intervals. The purpose of the guard intervals is to prevent data sent in the current M OOK time-domain symbols from interfering with the data sent in the next group of M OOK time-domain symbols or to prevent the data sent in the next group of M OOK time-domain symbols from interfering with the data sent in the previous group of M OOK time-domain symbols.

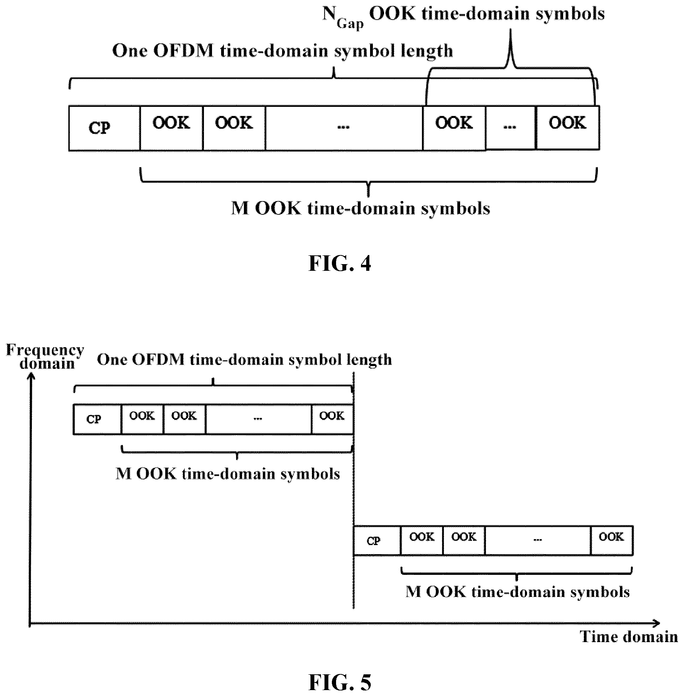

As shown in FIG. 4, the time-domain position of one OFDM time-domain symbol is aligned with the time-domain position of M OOK time-domain symbols. The M OOK time-domain symbols include $N_{Gap}$ OOK time-domain symbols used as guard intervals. No information or no predetermined information is sent in the $N_{Gap}$ OOK time-domain symbols.

In an embodiment, the first signal may occupy, but not limited to, a third number of second-type time-domain symbols in the time domain. The third number is obtained based on the first number and the second number. For example, the first signal occupies Ceil(P/M) OFDM time-domain symbols in the time domain. Ceil( ) denotes the ceiling operator. P denotes the first number. M denotes the second number. It is to be noted that the third number may be obtained based on the first number and the second number in other manners. This is not limited here.

In an embodiment, the second number of first-type time-domain symbols form a first symbol set, and multiple first symbol sets form a first symbol set group. In this case, the first signal may be formed by, but not limited to, at least one first symbol set, or the first signal may formed by, but not limited to, at least one first symbol set group.

In an embodiment, the sending mode of the first signal includes a frequency-hopping sending mode, and the frequency-hopping pattern of the frequency-hopping sending mode includes at least one of the following: two adjacent first symbol sets occupy different frequency-domain resources; two adjacent first symbol set groups occupy different frequency-domain resources; two adjacent first symbol set groups occupy different frequency-domain resources, and multiple first symbol sets in the same first symbol set group occupy the same frequency-domain resources; two adjacent first symbol set groups occupy different frequency-domain resources, and multiple first symbol sets in the same first symbol set group occupy different frequency-domain resources; or two adjacent first symbol set groups occupy the same frequency-domain resources, and multiple first symbol sets in the same first symbol set group occupy different frequency-domain resources.

As shown in FIG. 5, one part composed of M OOK time-domain symbols (that is, one first symbol set) occupies a first frequency-domain position, and another part composed of M OOK time-domain symbols (that is, another first symbol set) occupies a second frequency-domain position. The first frequency domain is different from the second frequency domain.

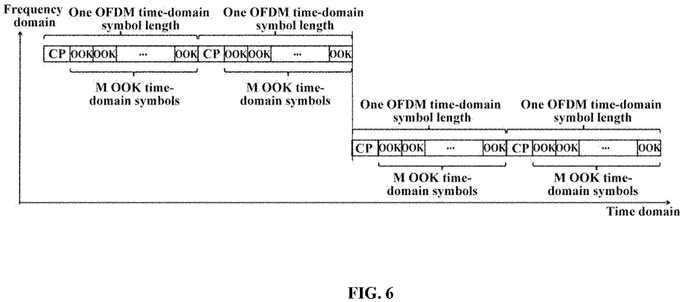

As shown in FIG. 6, one OOK time-domain symbol group (that is, one first symbol set group) occupies a third frequency-domain position, and the other OOK time-domain symbol group (that is, the other first symbol set group) occupies a fourth frequency-domain position. The two first symbol sets in the one OOK time-domain symbol group (that is, two parts, each composed of M OOK time-domain symbols) both occupy the third frequency-domain position, and the two first symbol sets in the other OOK time-domain symbol group (that is, two parts, each composed of M OOK time-domain symbols) both occupy the fourth frequency-domain position. The third frequency domain is different from the fourth frequency domain.

In terms of the statement that "two adjacent first symbol set groups occupy the same frequency-domain resources, and multiple first symbol sets in the same first symbol set group occupy different frequency-domain resources", the corresponding frequency-hopping pattern may be understood as follows: The M first symbol sets in the 1st first symbol set group are transmitted using frequency hopping, and the second first symbol set group repeats the frequency resources occupied by the M first symbol sets in the 1st first symbol set group during transmission.

In an embodiment, the data information sent in the second number of first-type time-domain symbols is obtained based on the first data information of a length of a first value. The content and form of the first value may be configured to various types by those skilled in the art according to application scenarios. This is not limited here. The following embodiments explain several situations regarding the first value one by one.

The signal generation method of an embodiment of the present application includes, but is not limited to, S2000.

In S2000, second data information of a length of a second value is generated based on the first data information of a length of the first value. Data elements in the second data information include a fourth number of data elements in the first data information.

In this step, second data information of a length of the second value is generated based on the first data information of a length of the first value. The second data information of a length of the second value can be used as the data information sent in the second number of first-type time-domain symbols. Through this data information conversion, the data information required by the first-type time-domain symbols can be generated.

In an embodiment, any one of the first value, the second value, or the fourth number is determined based on the other two of the first value, the second value, and the fourth number. That is, the first value may be obtained based on the second value and the fourth number, the second value may be obtained based on the first value and the fourth number, or the fourth value may be obtained based on the first value and the second value. This is not limited here.

For example, the data information sent in M OOK time-domain symbols is $S_M$. It is defined that $S_M = [s_0, s_1, s_2, s_3..., s_{M-1}]$ and has a length of M. $S_M$ is converted into data information $Q_K$ by using the following formula. The length of $Q_K$ is K.

$$Q_K = [\underbrace{s_0, s_0, \cdots, s_0}_{A}, \underbrace{s_1, s_1, \cdots, s_1}_{A}, \ldots, \underbrace{s_{M-1}, s_{M-1}, \cdots, s_{M-1}}_{A}].$$

The fourth number A is an integer greater than or equal to 1. The second value K is an integer greater than or equal to the first value M. The relationship between K, M, and A is as follows: K=M*A.

In an embodiment, the tail of the second data information is added with a seventh number of data elements whose value is 0 or preset. The seventh number is determined based on the first value, the fourth number, and the second value. For example, when M*A < K, the second data information is not fully filled. In this case, the tail of the second data information is added with a seventh number of data elements whose value is 0 or preset so that K = M*A is satisfied to make the second data information fully filled. However, it is to be noted that in practical application, it is also required to be considered that when the last one or more OOK time-domain symbols among the K OOK time-domain symbols are used as guard intervals, it is not necessary to rely solely on determining whether M*A < K. This is not limited here.

In an embodiment, the second value is one of the following: the number of subcarriers, which corresponds to second-type time-domain symbols corresponding to a frequency-domain bandwidth in the frequency domain, configured for the first signal; or the number of subcarriers, which corresponds to second-type time-domain symbols filled with data in the frequency domain, of the first signal.

The second value K may be other numbers that may be configured by those skilled in the art according to application scenarios. This is not limited here.

An example is described as below to clarify how the second value K is determined.

Example one

The number of OFDM subcarriers corresponding to the frequency-domain bandwidth configured by LP-WUS is B. The value of B is determined by the bandwidth occupied by LP-WUS and the OFDM subcarrier spacing, that is, B = bandwidth/subcarrier spacing.

Additionally, the information that can be filled in the B subcarriers includes at least one of the following: At the upper boundary of the bandwidth, B1 (which is an integer greater than or equal to 0) subcarriers are used as the upper boundary guard bandwidth; at the lower boundary of the bandwidth, B2 (which is an integer greater than or equal to 0) subcarriers are used as the lower boundary guard bandwidth; at the center of the B subcarriers, B3 (which is an integer greater than or equal to 1) subcarriers are filled with no data or filled with data of 0; or K (which is an integer greater than or equal to 1 and less than or equal to B) subcarriers among the B subcarriers are filled with data.

The position of the K subcarriers includes at least one of the following: the remaining subcarriers after excluding B1 subcarriers and B2 subcarriers from the B subcarriers; or the remaining subcarriers after excluding B1 subcarriers, B2 subcarriers, and B3 subcarriers from the B subcarriers.

The second number of first-type time-domain symbols contained in one second-type time-domain symbol may be generated in other manners that may be configured by those skilled in the art according to application scenarios. This is not limited here.

An example to clarify how the second number of first-type time-domain symbols contained in one second-type time-domain symbol is generated is described as follows.

Example two

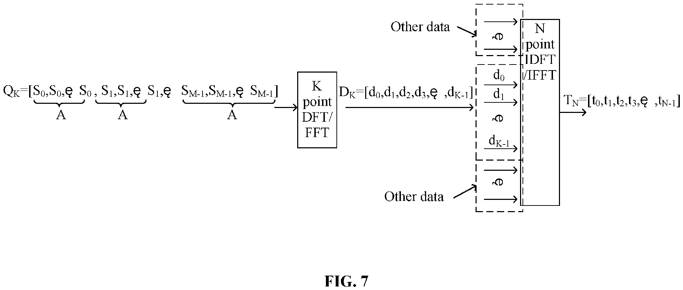

As shown in FIG. 7, using OFDM time-domain symbols as the second-type time-domain symbols, at least one signal system is constructed. In this signal system, the generation of M OOK time-domain symbols in one OFDM time-domain symbol may include, but is not limited to, the following steps:

(1) A K-point DFT/FFT operation is performed on the data information $Q_K$, resulting in the data information $D_K = [d_0, d_1, d_2, d_3, ..., d_{K-1}]$.

(2) The data information $D_K$ is mapped onto the K OFDM subcarriers corresponding to LP-WUS in the frequency domain.

(3) In the frequency-domain bandwidth of the signal system, in addition to the K OFDM subcarriers occupied by LP-WUS, other subcarriers can also be filled with other data information. Therefore, when the frequency-domain bandwidth of the signal system includes N OFDM subcarriers, an N point IDFT/IFFT operation is performed on the data filled in these N subcarriers, resulting in the time-domain data $T_N = [t_0, t_1, t_2, t_3, ..., t_{N-1}]$ for N sample points.

When no data other than LP-WUS is transmitted in the signal system, $T_N = [t_0, t_1, t_2, t_3, ..., t_{N-1}]$ represents the sample point data of M OOK time-domain symbols. $[t_0, t_1, t_2, t_3, ..., t_{N/M-1}]$ represents the sample point data of the first OOK time-domain symbol among the M OOK time-domain symbols, $[t_{N/M}, t_{N/M+1}, ..., t_{2N/M-1}]$ represents the sample point data of the second OOK time-domain symbol, ..., and $[t_{(M-1)N/M}, t_{(M-1)N/M+1}, ..., t_{N-1}]$ represents the sample point data of the Mth OOK time-domain symbol among the M OOK time-domain symbols.

When data in addition to LP-WUS is transmitted in the signal system, $T_N = [t_0, t_1, t_2, t_3, ...., t_{N-1}]$ represents the superimposed expression of the sample point data of time-domain symbols of LP-WUS and other data. The sample point data of the first OOK time-domain symbol among the M OOK time-domain symbols is contained in $[t_0, t_1, t_2, t_3, ..., t_{N/M-1}]$, the sample point data of the second OOK time-domain symbol among the M OOK time-domain symbols is contained in $[t_{N/M}, t_{N/M+1}, ..., t_{2N/M-1}]$, ..., and the sample point data of the Mth OOK time-domain symbol among the M OOK time-domain symbols is contained in $[t_{(M-1)N/M}, t_{(M-1)N/M+1}, ..., t_{N-1}]$.

Additionally, before the time-domain data $T_N = [t_0, t_1, t_2, t_3, ..., t_{N-1}]$ for the N sample points is sent, a cyclic prefix (CP) addition operation is required. This involves repeating information about $N_{cp}$ sample points at the tail of the time-domain data $T_N$ for the N sample points to the head of $T_N$ for the N sample points, resulting in time-domain data for $(N+N_{cp})$ sample points. The time-domain data for the $(N+N_{cp})$ sample points is then transmitted.

In an embodiment, the value of at least one data element in the first data information is 0.

In an embodiment, a data element whose value is 0 in the first data information is located at the tail of the first data information.

In an embodiment of the present application, the signal generation method also includes, but is not limited to, S3000.

In S3000, each data element in the first data information is expanded into third data information of a length of a third value to obtain fourth data information of a length of a fourth value.

In this step, each data element in the first data information is expanded into third data information of a length of the third value to obtain fourth data information of a length of the fourth value so that each data element in the first data information is further expanded to obtain fourth data information of a length of the fourth value that satisfies the requirements.

It is to be noted that S3000 is also applicable to a data element 0. This means that the data element 0 may also be expanded based on S3000 into a data element 0 of a length of the third value.

In an embodiment, for the second number of first-type time-domain symbols, when each data element in the corresponding first data information is expanded, the third values obtained from expanding data elements having the same value are different, or the third values obtained from expanding data elements having the same value are the same while the obtained third data information differs.

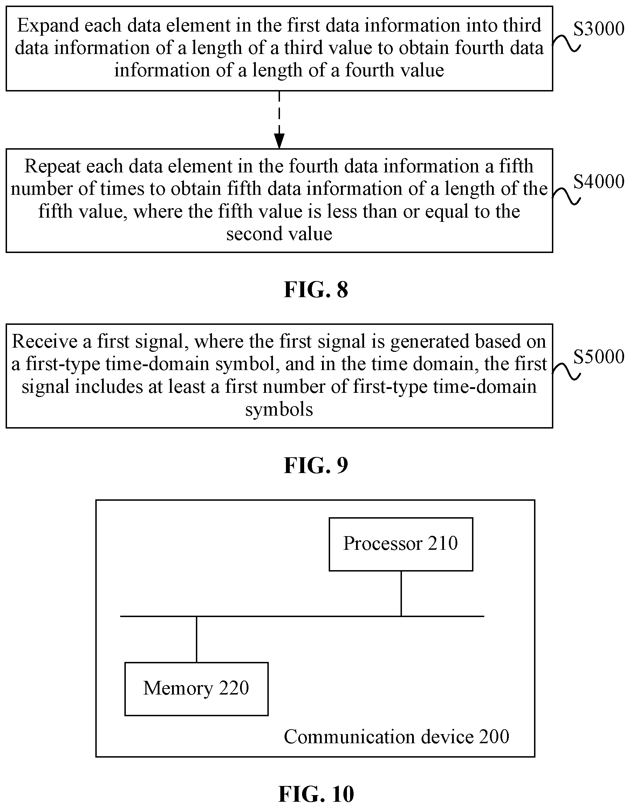

As shown in FIG. 8, in an embodiment of the present application, after S3000, the method includes, but is not limited to, S4000.

In S4000, each data element in the fourth data information is repeated a fifth number of times to obtain fifth data information of a length of the fifth value. The fifth value is less than or equal to the second value.

In this step, after the required fourth data information is obtained, each data element in the fourth data information is repeated the fifth number of times to achieve further expansion of the structure of the fourth data information. This results in the fifth data information of a length of the fifth value that satisfies the requirements. Here the second value refers to the "second value" of step S2000 "second data information of a length of a second value is generated based on the first data information of a length of a first value" of the previous embodiment, meaning that the second data information of a length of the second value is further determined based on the first data information of a length of the first value.

In an embodiment, each data element in the fourth data information is configured to be repeated a fifth number of times. Preferably but not necessarily, each data element in the fourth data information is configured to be consecutively repeated a fifth number of times.

In an embodiment, when the fifth value is less than the second value, a sixth number of data elements whose value is 0 or preset are added to the tail of the fifth data information to obtain sixth data information of a length of the second value.

An example to clarify how the sixth data information is generated is described as follows.

Example three

The sixth data information may be generated using, but not limited to, the steps as follows.

In step 1, the information to be sent in M OOK time-domain symbols is $Inf_H$, and it is defined that $Inf_H = [i_0, i_1, i_2, i_3..., i_{H-1}]$ and has a length of H. Here H is an integer greater than or equal to 1 and less than or equal to M.

Further, at least one data element $i_h$ in $Inf_H$ has a value of 0.

Further, the data element $i_h$ whose value is 0 is located at the last at least one element of $Inf_H$.

In step 2, each data element $i_h$ in $Inf_H$ is expanded into expanded data $E_L^h$ having a length of L.

$$E_L^h = [e_0^h, e_1^h, e_2^h, \ldots, e_{L-1}^h]$$

. L is an integer greater than or equal to 1, and $Inf_H$ is expanded into data $EInf_{H*L}$ of a length of H*L. That is,

$$EInf_{H*L} = [e_0^0, e_1^0, e_2^0, \ldots, e_{L-1}^0 \quad e_0^1, e_1^1, e_2^1, \ldots, e_{L-1}^1, \ldots, e_0^{H-1}, e_1^{H-1}, e_2^{H-1}, \ldots, e_{L-1}^H]$$

.

Further, for the expanded data of the data element $i_h$, $E_L^h$ represents L elements 0. Here the value of the data element $i_h$ is 0.

In step 3, each element in the data $EInf_{H*L}$ of a length of H*L is consecutively repeated A times to form the data information $Q_{H*L*A}$ of a length of H*L*A. Here H*L*A is less than or equal to the second value K, and the fourth number A is an integer greater than or equal to 1.

Further, when H*L*A is less than K, data elements 0 of a length of (K-H*L*A) or predetermined elements are added to the tail of $Q_{H*L*A}$ to form the data information $Q_K$ of a length of K.

An example to clarify the working principles of the previous embodiments is described as follows.

Example four

LP-WUS occupies 32 OOK time-domain symbols during transmission. The length of every M (which is equal to 8) OOK time-domain symbols is the same as that of one OFDM time-domain symbol. The 8 OOK time-domain symbols carry 2 bits of information. For example, the corresponding 2 bits of information are "1 0". Each bit of information needs to be expanded using an extension code of a length of 4. For example, bit 1 is expanded to 1 0 1 0, while bit 0 is expanded to 0 1 0 1. Thus, the expanded information transmitted across the 8 OOK time-domain symbols is the information "1 0 1 0 0 1 0 1" of a length of D (which is equal to 8). The LP-WUS occupies 72 OFDM subcarriers in the frequency domain. The total frequency-domain bandwidth of the system includes 1024 OFDM subcarriers. Thus, each element of the information "1 0 1 0 0 1 0 1" is repeated 72/8 = 9 times, resulting in the data information $Q_K$=[111111111 000000000 111111111 0000000000 000000000 111111111 000000000 111111111].

Then the data information $Q_K$ experiences the operations as follows.

(1) A K-point DFT/FFT operation is performed on the data information $Q_K$, resulting in the data information $D_K = [d_0, d_1, d_2, d_3, ..., d_{K-1}]$.

(2) The data information $D_K$ is mapped onto the K OFDM subcarriers corresponding to LP-WUS in the frequency domain.

(3) In the frequency-domain bandwidth of the signal system, in addition to the K OFDM subcarriers occupied by LP-WUS, other subcarriers may also be filled with other data information. Therefore, when the frequency-domain bandwidth of the signal system includes N OFDM subcarriers, an N point IDFT/IFFT operation is performed on the data filled to these N subcarriers, resulting in the time-domain data $T_N = [t_0, t_1, t_2, t_3, ..., t_{N-1}]$ for N sample points.

When no data other than LP-WUS is transmitted in the signal system, $T_N = [t_0, t_1, t_2, t_3, ..., t_{N-1}]$ represents the sample point data of M OOK time-domain symbols. $[t_0, t_1, t_2, t_3, ..., t_{N/M-1}]$ represents the sample point data of the first OOK time-domain symbol among the M OOK time-domain symbols, $[t_{N/M}, t_{N/M+1}, ..., t_{2N/M-1}]$ represents the sample point data of the second OOK time-domain symbol, ..., and $[t_{(M-1)N/M}, t_{(M-1)N/M+1}, ..., t_{N-1}]$ represents the sample point data of the Mth OOK time-domain symbol among the M OOK time-domain symbols.

When data in addition to LP-WUS is transmitted in the signal system, $T_N = [t_0, t_1, t_2, t_3, ..., t_{N-1}]$ represents the superimposed expression of the sample point data of time-domain symbols of LP-WUS and other data. The sample point data of the first OOK time-domain symbol among the M OOK time-domain symbols is contained in $[t_0, t_1, t_2, t_3, ..., t_{N/M-1}]$, the sample point data of the second OOK time-domain symbol among the M OOK time-domain symbols is contained in $[t_{N/M}, t_{N/M+1}, ..., t_{2N/M-1}]$, ..., and the sample point data of the Mth OOK time-domain symbol among the M OOK time-domain symbols is contained in $[t_{(M-1)N/M}, t_{(M-1)N/M+1}, ..., t_{N-1}]$.

Additionally, before the time-domain data $T_N = [t_0, t_1, t_2, t_3, ..., t_{N-1}]$ for the N sample points is sent, a cyclic prefix (CP) addition operation is required. This involves repeating information about $N_{cp}$ sample points at the tail of the time-domain data $T_N$ for the N sample points to the head of $T_N$ for the N sample points, resulting in time-domain data for $(N+N_{cp})$ sample points. The time-domain data for the $(N+N_{cp})$ sample points is then transmitted.

It is to be noted that data elements whose value is 0, after experiencing transformation in steps (2) and (3) of example three and then operations of example four, ultimately generate time-domain sample points that do not transmit any information and are solely used for bandwidth protection.

In an embodiment, the second number is determined based on at least the subcarrier spacing of the second-type time-domain symbols in the frequency domain. For example, when the subcarrier spacing of an OFDM time-domain symbol is 30 kHz, the second number M = 8; thus, when the subcarrier spacing of an OFDM time-domain symbol is 15 kHz, M = 30/15*8 = 16. Similarly, when the subcarrier spacing of an OFDM time-domain symbol is 15 kHz, M = 8; thus, when the subcarrier spacing of an OFDM time-domain symbol is 30 kHz, M = 15/30*8 = 4.

In an embodiment, when data information sent in two the second number of first-type time-domain symbols are third data information and fourth data information respectively, the third data information and the fourth data information satisfy at least one of the following: The third data information and the fourth data information constitute a Gray complementary sequence pair; when the third data information and the fourth data information are each a real number sequence, the third data information and the fourth data information satisfy $\sum_{n=0}^{M-1}(s_n \cdot s_n + w_n \cdot w_n) = 2M$, where M denotes the second number, $s_n$ denotes an nth data element in the third data information, and $w_n$ denotes an nth data element in the fourth data information; when the third data information and the fourth data information are each a real number sequence, the third data information and the fourth data information satisfy $\sum_{n=0}^{M-1-j}(s_n \cdot s_{n+j} + w_n \cdot w_{n+j}) = 0$, where j is a positive integer, M denotes the second number, $s_n$ denotes an nth data element in the third data information, $s_{n+j}$ denotes an (n + j)th data element in the third data information, $w_n$ denotes an nth data element in the fourth data information, and $w_{n+j}$ denotes an (n + j)th data element in the fourth data information; when the third data information and the fourth data information are each a complex number sequence, the third data information and the fourth data information satisfy $\sum_{n=0}^{M-1}(s_n \cdot s'_n + w_n \cdot w'_n) = 2M$, where M denotes the second number, $s_n$ denotes an nth data element in the third data information, $s'_n$ is a conjugate of $s_n$, $w_n$ denotes an nth data element in the fourth data information, and $w'_n$ is a conjugate of $w_n$; or when the third data information and the fourth data information are each a complex number sequence, the third data information and the fourth data information satisfy $\sum_{n=0}^{M-1-j}(s_n \cdot s'_{n+j} + w_n \cdot w'_{n+j}) = 0$, where j is a positive integer, M denotes the second number, $s_n$ denotes an nth data element in the third data information, $s'_{n+j}$ is a conjugate of $s_{n+j}$, $s_{n+j}$ denotes an (n + j)th data element in the third data information, $w_n$ denotes an nth data element in the fourth data information, $w'_{n+j}$ is a conjugate of $w_{n+j}$, and $w_{n+j}$ denotes an (n + j)th data element in the fourth data information.

For example, data information sent in two M OOK time-domain symbols are $S_M$ and $W_M$ respectively.

$S_M = [s_0, s_1, s_2, s_3..., s_{M-1}]$ and has a length of M. $W_M = [w_0, w_1, w_2, w_3..., w_{M-1}]$ and has a length of M. $S_M$ and $W_M$ satisfy at least one of the following: $S_M$ and $W_M$ constitute a Gray complementary sequence pair; when $S_M$ and $W_M$ are each a real number sequence, $\sum_{n=0}^{M-1}(s_n \cdot s_n + w_n \cdot w_n) = 2M$; when $S_M$ and $W_M$ are each a real number sequence, in the case where $j \neq 0$, $\sum_{n=0}^{M-1-j}(s_n \cdot s_{n+j} + w_n \cdot w_{n+j}) = 0$; when $S_M$ and $W_M$ are each a complex number sequence, $\sum_{n=0}^{M-1}(s \cdot s'_n + w_n \cdot w'_n) = 2M$ , where $s'_n$ is a conjugate of $s_n$, and $w'_n$ is a conjugate of $W_n$; when $S_M$ and $W_M$ are each a complex number sequence, in the case where $j \neq 0$, $\sum_{n=0}^{M-1-j}(s_n \cdot s'_{n+j} + w_n \cdot w'_{n+j}) = 0$, where $S'_{n+j}$ is a conjugate of $S_{n+j}$, and $w'_{n+j}$ is a conjugate of $w_{n+j}$.

In an embodiment, the first signal includes at least one of a first part and a second part. The first part is at least one of a preamble, a synchronization signal, a synchronization sequence, a reference signal, or a reference sequence. The second part is at least one of control information, data information, or a load.

In an embodiment, both the first part and the second part can be generated in a similar manner with reference to S1000, and the first-type time-domain symbol in this case can still be similarly characterized by the second-type time-domain symbol. Since this part of the content is described in detail in the previous embodiments, it is not repeated here.

It is to be noted that the first part and the second part may be configured to various types by those skilled in the art according to application scenarios. This is not limited here.

In an embodiment, when the first signal includes the first part and the second part, the first part is related to the second part in at least one of the following manners: The value of the second number corresponding to the first part is the same as the value of the second number corresponding to the second part; or a mapping exists between the value of the second number corresponding to the first part and the value of the second number corresponding to the second part, where the mapping includes at least one of the following: The value of the second number corresponding to the first part is determined based on the value of the second number corresponding to the second part; or the value of the second number corresponding to the second part is determined based on the value of the second number corresponding to the first part.

For example, in an application scenario of time-domain filling, the value of the second number corresponding to the first part is $M_{message1}$, and the value of the second number corresponding to the second part is $M_{message2}$, and then the relationship between $M_{message1}$ and $M_{message2}$ includes at least one of the following: The value of $M_{message1}$ is the value of $M_{message2}$; or there is a mapping between the value of $M_{message1}$ and the value of $M_{message2}$: the value of $M_{message2}$ may be determined by the value of $M_{message1}$, and contrarily, the value of $M_{message1}$ may be determined by the value of $M_{message2}$.

In an embodiment, when the first signal includes the first part and the second part, the first part is related to the second part in the following manner: A mapping exists between the value of the first number corresponding to the first part and the value of the second number corresponding to the second part, and one of the value of the first number corresponding to the first part or the value of the second number corresponding to the second part is determined based on the other of the value of the first number corresponding to the first part or the value of the second number corresponding to the second part.

For example, in another application scenario of time-domain filling, the value of the first number corresponding to the first part is $M_{preambl}$, and the value of the second number corresponding to the second part is $M_{message}$. The relationship between $M_{preambl}$ and $M_{message}$ includes at least the following: There exists a mapping between the value of $M_{preambl}$ and the value of $M_{message}$ such that the value of $M_{message}$ may be determined by the value of $M_{preambl}$, and the value of $M_{preambl}$ may also be determined by the value of $M_{message}$.

In an embodiment, regarding the preceding mapping, the base station may configure, configure by default, or standardly define the values of the second numbers corresponding to multiple first parts, with each value corresponding to the second number corresponding to one second part, as shown in Table 1.

Table 1 Mapping between the value of the second number corresponding to the first part and the value of the second number corresponding to the second part

| Index | First Part | Second Part |
|-------|-----------|-------------|
| 0 | 4 | 4 |
| 1 | 4 | 8 |
| 2 | 4 | 16 |
| 3 | 8 | 4 |
| 4 | 8 | 8 |
| 5 | 8 | 16 |
| 6 | 16 | 4 |
| 7 | 16 | 8 |

(continued)

| Index | First Part | Second Part |
|---|---|---|
| 8 | 16 | 16 |

Then, based on the index information in Table 1, the value of the second number corresponding to the first part and the value of the second number corresponding to the second part can be intuitively determined.

In an embodiment, in an NR wireless communication system that supports the transmission of LP-WUS, the UE can wake up the main radio device for data transmission and/or reception by detecting the LP-WUS. After the UE wakes up the main radio device, the UE also needs to perform Radio Resource Management (RRM) measurement for the serving cell. Based on the RRM measurement result of the serving cell, the UE determines whether to perform channel quality measurement for neighboring cells, Inter-Frequency, or Intra-Frequency. For example, when the RRM measurement result of the serving cell is greater than or equal to a threshold or when the measurement result indicates that the channel quality of the serving cell is good, the UE does not perform channel quality measurement for neighboring cells, Inter-Frequency, or Intra-Frequency. Conversely, when the RRM measurement result of the serving cell is less than or equal to a threshold or when the measurement result indicates that the channel quality of the serving cell is poor, the UE needs to perform channel quality measurement for neighboring cells, Inter-Frequency, or Intra-Frequency.

An example to clarify the details of relevant embodiments is described as below,

Example five

When the first signal includes a first part and a second part, the time-domain length of the first signal is preferably 14 OFDM time-domain symbols (that is, the second-type time-domain symbols) or X times the 14 OFDM time-domain symbols. X is an integer greater than or equal to 1.

Preferably, the value of X is 1, 2, 4, 8, 16, or 32.

Preferably, the value of X corresponds to the size of the OFDM subcarrier spacing. For example, when the OFDM subcarrier spacing is 15 kHz, X = 2, 4, or 8. Further, the value of the first number M is 8.

Preferably, the value of X corresponds to the size of the OFDM subcarrier spacing. For example, when the OFDM subcarrier spacing is 15 kHz, X = 1, 2, or 4; further, the value of M is 16.

Preferably, the value of X corresponds to the size of the OFDM subcarrier spacing. For example, when the OFDM subcarrier spacing is 30 kHz, X = 4, 8, or 16. Further, the value of M is 4.

Preferably, the value of X corresponds to the size of the OFDM subcarrier spacing. For example, when the OFDM subcarrier spacing is 30 kHz, X = 2, 4, or 8. Further, the value of M is 8.

The time-domain length of the first signal is preferably the length of the OFDM time-domain symbols occupied by the synchronization signal and PBCH block (SSB) in the NR protocol or an integer multiple of the length of the OFDM time-domain symbols occupied by the SSB. Preferably, the first signal includes the first part.

The time-domain length of the first signal is preferably the length of the OFDM time-domain symbols occupied by the Control Resource Set (CORESET) in the NR protocol or an integer multiple of the length of the OFDM time-domain symbols occupied by the CORESET. Preferably, the first signal includes the second part.

The time-domain length of the first signal is preferably the length of the OFDM time-domain symbols occupied by the Physical Downlink Control Channel (PDCCH) in the CORESET of the NR protocol or an integer multiple of the length of the OFDM time-domain symbols occupied by the PDCCH in the CORESET. Preferably, the first signal includes the second part.

When the first signal includes two first parts, the number of OFDM time-domain symbols or OOK time-domain symbols occupied by the 1st first part is greater than the number of OFDM time-domain symbols or OOK time-domain symbols occupied by the second first part.

Further, the transmission period of the 1st first part is greater than the transmission period of the second first part.

Further, the 1st first part is used for RRM measurement.

Further, the 1st first part can be used for RRM measurement by multiple UEs.

Further, the 1st first part has only one value.

Further, the second first part is used for carrying system information change indication and/or carrying fallback indication information.

Further, the second first part can notify at least one UE.

Further, the second first part has multiple values, and different values carry different indication information.

In an embodiment, the first signal includes at least one bit of information. The at least one bit of information is obtained by encoding information carried by the second number of first-type time-domain symbols.

FIG. 9 is a flowchart of a signal receiving method according to an embodiment of the present application. The signal generation method may be applied to, but is not limited to, the first signal device 110 in the implementation environment shown in FIG. 1. The signal receiving method may include, but is not limited to, S5000.

In S5000, a first signal is received. The first signal is generated based on a first-type time-domain symbol. In the time domain, the first signal includes at least a first number of first-type time-domain symbols.

The first signal device 110 of this embodiment may be, but is not limited to, the UE in the implementation environment shown in FIG. 1. The second signal device 120 of this embodiment may be, but is not limited to, the base station in the implementation environment shown in FIG. 1. Alternatively, those skilled in the art may configure the first signal device 110 or the second signal device 120 according to the actual application scenario. This is not limited by this embodiment. To facilitate the description of the application scenarios and principles of the present application, the first signal device 110 and the second signal device 120 are a UE and a base station respectively by way of example in the following embodiments. This should not be construed as a limitation on embodiments of the present application.

Compared with related technologies, the UE receives a first signal for the purpose of using the first signal. The first signal includes at least a first number of first-type time-domain symbols in the time domain; therefore, when the first signal is used as a wake-up signal, it is possible to configure a shorter wake-up period for the wake-up signal based on the first-type time-domain symbol so that the wake-up signal latency can be reduced while the power consumption requirements of the UE are satisfied.

In an embodiment, the first-type time-domain symbol is related to a second-type time-domain symbol in at least one of the following manners: the position of a second number of first-type time-domain symbols in the time domain is aligned with the position of one second-type time-domain symbol in the time domain, where the second number is less than or equal to the first number; the length of a second number of first-type time-domain symbols in the time domain is the same as the length of one second-type time-domain symbol in the time domain, where the second number is less than or equal to the first number; or a second number of first-type time-domain symbols are contained in one second-type time-domain symbol, where the second number is less than or equal to the first number.

In an embodiment, the last one or more of the second number of first-type time-domain symbols serve as guard intervals.

In an embodiment, the first signal occupies, in the time domain, a third number of second-type time-domain symbols. The third number is obtained based on the first number and the second number.

In an embodiment, the second number of first-type time-domain symbols form a first symbol set, and multiple first symbol sets form a first symbol set group. In this case, the first signal may include, but is not limited to, at least one first symbol set or at least one first symbol set group.

In an embodiment, the sending mode of the first signal includes a frequency-hopping sending mode, and the frequency-hopping pattern of the frequency-hopping sending mode includes at least one of the following: two adjacent first symbol sets occupy different frequency-domain resources; two adjacent first symbol set groups occupy different frequency-domain resources; two adjacent first symbol set groups occupy different frequency-domain resources, and multiple first symbol sets in the same first symbol set group occupy the same frequency-domain resources; two adjacent first symbol set groups occupy different frequency-domain resources, and multiple first symbol sets in the same first symbol set group occupy different frequency-domain resources; or two adjacent first symbol set groups occupy the same frequency-domain resources, and multiple first symbol sets in the same first symbol set group occupy different frequency-domain resources.

In an embodiment, data information sent in the second number of first-type time-domain symbols is obtained based on first data information of a length of a first value.

In an embodiment, the first data information of a length of the first value is configured for generation of second data information of a length of a second value. Data elements in the second data information include a fourth number of data elements in the first data information.

In an embodiment, any one of the first value, the second value, or the fourth number is determined based on the other two of the first value, the second value, and the fourth number.

In an embodiment, the tail of the second data information includes a seventh number of data elements whose value is 0 or preset. The seventh number is determined based on the first value, the fourth number, and the second value.

In an embodiment, the second value is one of the following: the number of subcarriers, which corresponds to second-type time-domain symbols corresponding to a frequency-domain bandwidth in the frequency domain, configured for the first signal; or the number of subcarriers, which corresponds to second-type time-domain symbols filled with data in the frequency domain, of the first signal.

The second value K may be other numbers that may be configured by those skilled in the art according to application scenarios. This is not limited here.

The second number of first-type time-domain symbols contained in one second-type time-domain symbol may be generated in other manners that may be configured by those skilled in the art according to application scenarios. This is not limited here.

In an embodiment, at least one data element in the first data information has a value of 0.

In an embodiment, the at least one data element having a value of 0 in the first data information is located at the tail of the first data information.

In an embodiment, each data element in the first data information is expanded into third data information of a length of a third value so that fourth data information of a length of a fourth value is generated from the first data information.

In an embodiment, data elements in the first data information corresponding to the second number of first-type time-domain symbols are expanded in one of the following manners: Data elements having the same value are expanded to obtain different third values; or data elements having the same value are expanded to obtain the same third value but different third data information.

In an embodiment, each data element in the fourth data information is configured to be repeated a fifth number of times so that the fourth data information forms fifth data information of a length of the fifth value. The fifth value is less than or equal to the second value. Preferably but not necessarily, each data element in the fourth data information is configured to be consecutively repeated a fifth number of times.

In an embodiment, when the fifth value is less than the second value and when a sixth number of data elements whose value is 0 or preset are added to the tail of the fifth data information, this fifth data information forms sixth data information of a length of the second value.

In an embodiment, the second number is obtained based on at least the subcarrier spacing of the second-type time-domain symbols in the frequency domain.

In an embodiment, when data information sent in two the second number of first-type time-domain symbols are third data information and fourth data information respectively, the third data information and the fourth data information satisfy at least one of the following: the third data information and the fourth data information constitute a Gray complementary sequence pair; when the third data information and the fourth data information are each a real number sequence, the third data information and the fourth data information satisfy $\sum_{n=0}^{M-1}(s_n \cdot s_n + w_n \cdot w_n) = 2M$, where M denotes the second number, $s_n$ denotes the nth data element in the third data information, and $w_n$ denotes the nth data element in the fourth data information; when the third data information and the fourth data information are each a real number sequence, the third data information and the fourth data information satisfy $\sum_{n=0}^{M-1-j}(s_n \cdot s_{n+j} + w_n \cdot w_{n+j}) = 0$, where j is a positive integer, M denotes the second number, $s_n$ denotes the nth data element in the third data information, $s_{n+j}$ denotes the (n + j)th data element in the third data information, $w_n$ denotes the nth data element in the fourth data information, and $w_{n+j}$ denotes the (n + j)th data element in the fourth data information; when the third data information and the fourth data information are each a complex number sequence, the third data information and the fourth data information satisfy $\sum_{n=0}^{M-1}(s_n \cdot s'_n + w_n \cdot w'_n) = 2M$, where M denotes the second number, $s_n$ denotes the nth data element in the third data information, $s'_n$ is a conjugate of $s_n$, $w_n$ denotes the nth data element in the fourth data information, and $w'_n$ is a conjugate of $w_n$; or when the third data information and the fourth data information are each a complex number sequence, the third data information and the fourth data information satisfy $\sum_{n=0}^{M-1-j}(s_n \cdot s'_{n+j} + w_n \cdot w'_{n+j}) = 0$, where j is a positive integer, M denotes the second number, $s_n$ denotes the nth data element in the third data information, $s'_{n+j}$ is a conjugate of $s_{n+j}$, $s_{n+j}$ denotes the (n +j)th data element in the third data information, $w_n$ denotes the nth data element in the fourth data information, $w'_{n+j}$ is a conjugate of $w_{n+j}$, and $w_{n+j}$ denotes the (n + j)th data element in the fourth data information.

In an embodiment, the first signal includes at least one of a first part or a second part.

The first part is at least one of a preamble, a synchronization signal, a synchronization sequence, a reference signal, or a reference sequence. The second part is at least one of control information, data information, or a load.

The first part and the second part may also be of other types that may be configured by those skilled in the art according to application scenarios. This is not limited here.

In an embodiment, when the first signal includes the first part and the second part, the first part is related to the second part in at least one of the following manners: The value of the second number corresponding to the first part is the same as the value of the second number corresponding to the second part; or a mapping exists between the value of the second number corresponding to the first part and the value of the second number corresponding to the second part, where the mapping includes at least one of the following: The value of the second number corresponding to the first part is determined based on the value of the second number corresponding to the second part; or the value of the second number corresponding to the second part is determined based on the value of the second number corresponding to the first part.

In an embodiment, when the first signal includes the first part and the second part, the first part is related to the second part in the following manner: a mapping exists between the value of the first number corresponding to the first part and the value of the second number corresponding to the second part, and one of the value of the first number corresponding to the first part or the value of the second number corresponding to the second part is determined based on the other of the value of the first number corresponding to the first part or the value of the second number corresponding to the second part.

In an embodiment, the first signal includes at least one bit of information. The at least one bit of information is obtained by encoding information carried by the second number of first-type time-domain symbols.

Embodiments of the signal receiving method and embodiments of the signal generation method pertain to the same inventive concept. They differ in only executing entity. The signal generation method is executed by the second signal device 120. The signal receiving method is executed by the first signal device 110. Therefore, for implementations of embodiments of the signal receiving method, see embodiments of the signal generation method. The details are not repeated here.

Additionally, as shown in FIG. 10, an embodiment of the present application provides a communication device 200. The communication device 200 includes at least one processor 210 and at least one memory 220 for storing at least one program. When executed by the at least one processor 210, the at least one program causes the at least one processor 210 to perform the signal generation method of any previous embodiment or the signal receiving method of any previous embodiment.

Additionally, an embodiment of the present application provides a computer-readable storage medium storing computer-executable instructions for performing the signal generation method of any previous embodiment or the signal receiving method of any previous embodiment.

Additionally, an embodiment of the present application provides a computer program product. The computer program product includes a computer program or computer instructions stored on a computer-readable storage medium. A processor of a computing device reads the computer programs or computer instructions from the computer-readable storage medium and executes the computer programs or computer instructions, causing the computing device to perform the signal generation method of any previous embodiment or the signal receiving method of any previous embodiment.

The system architecture and application scenarios described in embodiments of the present application are intended to more clearly explain the technical solutions of embodiments of the present application and do not limit the technical solutions provided in embodiments of the present application. It can be seen by those skilled in the art that with the evolution of the system architecture and the emergence of new application scenarios, the technical solutions provided in embodiments of the present application is equally applicable to similar technical problems.

It is to be understood by those of ordinary skill in the art that some or all steps of the preceding disclosed method and function modules/units in the preceding system or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a CPU, a digital signal processor, or a microprocessor, may be implemented as hardware, or may be implemented as integrated circuits such as application-specific integrated circuits. Such software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an EEPROM, a flash memory or other memory technologies, a CD-ROM, a digital video disc (DVD) or other optical storages, a magnetic cassette, a magnetic tape, a magnetic disk or other magnetic storage devices, or any other medium that can be used for storing desired information and that can be accessed by a computer. Additionally, as is known to those having ordinary skill in the art, the communication media generally include computer-readable instructions, data structures, program modules, or other data in carriers or in modulated data signals transported in other transport mechanisms and may include any information delivery medium.

In this specification, the term such as "component", "module", or "system" is used to denote a computer-related entity such as hardware, firmware, a combination of hardware and software, software, or software being executed. For example, the component may be, but is not limited to, a process running on a processor, a processor, an object, an executable file, an execution thread, a program, or a computer. Illustratively, a computing device or an application running on the computing device is a component. One or more components may reside in a process or execution thread. These components may be located on a single computer or distributed across two or more computers. Additionally, these components may operate on various computer-readable media where different data structures are stored. For example, the component may communicate in a local or remote process based on signals containing one or more data packets (for example, data from the interaction between two components in a local system, between two components a distributed system, or between two components across a network, such as the Internet that communicates with another system through signals).

**Claims**

1. A signal generation method, comprising:
   generating a first signal based on a first-type time-domain symbol, wherein in a time domain, the first signal comprises at least a first number of first-type time-domain symbols.

2. The method of claim 1, wherein the first-type time-domain symbol is related to a second-type time-domain symbol in at least one of the following manners:

   a position of a second number of first-type time-domain symbols in the time domain is aligned with a position of one second-type time-domain symbol in the time domain, wherein the second number is less than or equal to the first number;
   a length of a second number of first-type time-domain symbols in the time domain is the same as a length of one second-type time-domain symbol in the time domain, wherein the second number is less than or equal to the first number; or
   a second number of first-type time-domain symbols are contained in one second-type time-domain symbol, wherein the second number is less than or equal to the first number.

3. The method of claim 2, wherein last one or more of the second number of first-type time-domain symbols serve as guard intervals.

4. The method of claim 2, wherein the first signal occupies, in the time domain, a third number of second-type time-domain symbols, wherein the third number is obtained based on the first number and the second number.

5. The method of claim 2, wherein the second number of first-type time-domain symbols form a first symbol set, and multiple first symbol sets form a first symbol set group.

6. The method of claim 5, wherein a sending mode of the first signal comprises a frequency-hopping sending mode, and a frequency-hopping pattern of the frequency-hopping sending mode comprises at least one of the following:

   two adjacent first symbol sets occupy different frequency-domain resources;
   two adjacent first symbol set groups occupy different frequency-domain resources;
   two adjacent first symbol set groups occupy different frequency-domain resources, and multiple first symbol sets in a same first symbol set group occupy same frequency-domain resources;
   two adjacent first symbol set groups occupy different frequency-domain resources, and multiple first symbol sets in a same first symbol set group occupy different frequency-domain resources; or
   two adjacent first symbol set groups occupy same frequency-domain resources, and multiple first symbol sets in a same first symbol set group occupy different frequency-domain resources.

7. The method of claim 2, wherein data information sent in the second number of first-type time-domain symbols is obtained based on at least first data information of a length of a first value.

8. The method of claim 7, further comprising:

   generating second data information of a length of a second value based on the first data information of the length of the first value, wherein
   data elements in the second data information comprise a fourth number of data elements in the first data information.

9. The method of claim 8, wherein any one of the first value, the second value, or the fourth number is determined based on the other two of the first value, the second value, and the fourth number.

10. The method of claim 8, wherein a tail of the second data information comprises a seventh number of data elements whose value is 0 or preset, wherein the seventh number is determined based on the first value, the fourth number, and the second value.

11. The method of claim 8, wherein the second value is one of the following:

a number of subcarriers, which corresponds to second-type time-domain symbols corresponding to a frequency-domain bandwidth in a frequency domain, configured for the first signal; or

a number of subcarriers, which corresponds to second-type time-domain symbols filled with data in a frequency domain, of the first signal.

12. The method of claim 7, wherein at least one data element in the first data information has a value of 0.

13. The method of claim 12, wherein the at least one data element having the value of 0 in the first data information is located at a tail of the first data information.

14. The method of claim 12, further comprising:
expanding each data element in the first data information into third data information of a length of a third value to obtain fourth data information of a length of a fourth value.

15. The method of claim 14, wherein data elements in the first data information corresponding to the second number of first-type time-domain symbols are expanded in one of the following manners: data elements having a same value are expanded to obtain different third values; or data elements having a same value are expanded to obtain a same third value but different third data information.

16. The method of claim 14, further comprising:
repeating each data element in the fourth data information a fifth number of times to obtain fifth data information of a length of a fifth value, wherein the fifth value is less than or equal to the second value.

17. The method of claim 16, wherein in a case where the fifth value is less than the second value, a sixth number of data elements whose value is 0 or preset are added to a tail of the fifth data information to obtain sixth data information of a length of the second value.

18. The method of claim 2, wherein the second number is obtained based on at least a subcarrier spacing of the second-type time-domain symbol in a frequency domain.

19. The method of claim 2, wherein in a case where data information sent in two the second number of first-type time-domain symbols are third data information and fourth data information respectively, the third data information and the fourth data information satisfy at least one of the following:

the third data information and the fourth data information constitute a Gray complementary sequence pair;
in a case where the third data information and the fourth data information are each a real number sequence, the third data information and the fourth data information satisfy $\sum_{n=0}^{M-1}(s_n \cdot s_n + w_n \cdot w_n) = 2M$, wherein M denotes the second number, $s_n$ denotes an nth data element in the third data information, and $w_n$ denotes an nth data element in the fourth data information;
in a case where the third data information and the fourth data information are each a real number sequence, the third data information and the fourth data information satisfy $\sum_{n=0}^{M-1-j}(s_n \cdot s_{n+j} + w_n \cdot w_{n+j}) = 0$, wherein j is a positive integer, M denotes the second number, $s_n$ denotes an nth data element in the third data information, $s_{n+j}$ denotes an (n + j)th data element in the third data information, $w_n$ denotes an nth data element in the fourth data information, and $w_{n+j}$ denotes an (n + j)th data element in the fourth data information;
in a case where the third data information and the fourth data information are each a complex number sequence, the third data information and the fourth data information satisfy $\sum_{n=0}^{M-1}(s_n \cdot s'_n + w_n \cdot w'_n) = 2M$, wherein M denotes the second number, $s_n$ denotes an nth data element in the third data information, $s'_n$ is a conjugate of $s_n$, $w_n$ denotes an nth data element in the fourth data information, and $w'_n$ is a conjugate of $w_n$; or
in a case where the third data information and the fourth data information are each a complex number sequence, the third data information and the fourth data information satisfy $\sum_{n=0}^{M-1-j}(s_n \cdot s'_{n+j} + w_n \cdot w'_{n+j}) = 0$, wherein j is a positive integer, M denotes the second **number,** $s_n$ denotes an nth data element in the third data information, $S'_{n+j}$ is a conjugate of $S_{n+j}$, $s_{n+j}$ denotes an (n + j)th data element in the third data information, $w_n$ denotes an nth data element in the fourth data information, $w'_{n+j}$ is a conjugate of $w_{n+j}$, and $w_{n+j}$ denotes an (n + j)th data element in the fourth data information.

20. The method of claim 2, wherein the first signal comprises at least one of a first part or a second part, wherein the first part is at least one of a preamble, a synchronization signal, a synchronization sequence, a reference signal, or a reference sequence; and the second part is at least one of control information, data information, or a load.

21. The method of claim 20, wherein in a case where the first signal comprises the first part and the second part, the first part is related to the second part in at least one of the following manners:

a value of the second number corresponding to the first part is the same as a value of the second number corresponding to the second part; or
a mapping exists between a value of the second number corresponding to the first part and a value of the second number corresponding to the second part, wherein the mapping comprises at least one of the following:

the value of the second number corresponding to the first part is determined based on the value of the second number corresponding to the second part; or
the value of the second number corresponding to the second part is determined based on the value of the second number corresponding to the first part.

22. The method of claim 20, wherein in a case where the first signal comprises the first part and the second part, the first part is related to the second part in the following manner:
a mapping exists between a value of the first number corresponding to the first part and a value of the second number corresponding to the second part, and one of the value of the first number corresponding to the first part or the value of the second number corresponding to the second part is determined based on the other of the value of the first number corresponding to the first part or the value of the second number corresponding to the second part.

23. The method of claim 2, wherein the first signal comprises at least one bit of information, wherein the at least one bit of information is obtained by encoding information carried by the second number of first-type time-domain symbols.

24. A signal receiving method, comprising:
receiving a first signal, wherein the first signal is generated based on a first-type time-domain symbol, and in a time domain, the first signal comprises at least a first number of first-type time-domain symbols.

25. The method of claim 24, wherein the first-type time-domain symbol is related to a second-type time-domain symbol in at least one of the following manners:

a position of a second number of first-type time-domain symbols in the time domain is aligned with a position of one second-type time-domain symbol in the time domain, wherein the second number is less than or equal to the first number;
a length of a second number of first-type time-domain symbols in the time domain is the same as a length of one second-type time-domain symbol in the time domain, wherein the second number is less than or equal to the first number; or
a second number of first-type time-domain symbols are contained in one second-type time-domain symbol, wherein the second number is less than or equal to the first number.

26. The method of claim 25, wherein last one or more of the second number of first-type time-domain symbols serve as guard intervals.

27. The method of claim 25, wherein the first signal occupies, in the time domain, a third number of second-type time-domain symbols, wherein the third number is obtained based on the first number and the second number.

28. The method of claim 25, wherein the second number of first-type time-domain symbols form a first symbol set, and multiple first symbol sets form a first symbol set group.

29. The method of claim 28, wherein a sending mode of the first signal comprises a frequency-hopping sending mode, and a frequency-hopping pattern of the frequency-hopping sending mode comprises at least one of the following:

two adjacent first symbol sets occupy different frequency-domain resources;

two adjacent first symbol set groups occupy different frequency-domain resources;

two adjacent first symbol set groups occupy different frequency-domain resources, and multiple first symbol sets in a same first symbol set group occupy same frequency-domain resources;

two adjacent first symbol set groups occupy different frequency-domain resources, and multiple first symbol sets in a same first symbol set group occupy different frequency-domain resources; or

two adjacent first symbol set groups occupy same frequency-domain resources, and multiple first symbol sets in a same first symbol set group occupy different frequency-domain resources.

30. The method of claim 25, wherein data information sent in the second number of first-type time-domain symbols is obtained based on first data information of a length of a first value.

31. The method of claim 30, wherein the first data information of the length of the first value is configured for generation of second data information of a length of a second value, wherein
data elements in the second data information comprise a fourth number of data elements in the first data information.

32. The method of claim 31, wherein any one of the first value, the second value, or the fourth number is determined based on the other two of the first value, the second value, and the fourth number.

33. The method of claim 31, wherein a tail of the second data information comprises a seventh number of data elements whose value is 0 or preset, wherein the seventh number is determined based on the first value, the fourth number, and the second value.

34. A communication device, comprising:

at least one processor; and
at least one memory configured to store at least one program,
wherein when executed by the at least one processor, the at least one program causes the at least one processor to perform the signal generation method of any one of claims 1 to 23 or the signal receiving method of any one of claims 24 to 33.

35. A computer-readable storage medium storing a computer program executable by a processor to enable the processor to perform the signal generation method of any one of claims 1 to 23 or the signal receiving method of any one of claims 24 to 33.

FIG. 1

Generate a first signal based on a first-type time-domain symbol, where in the time domain, the first signal includes at least a first number of first-type time-domain symbols    S1000

FIG. 2

FIG. 3

$N_{Gap}$ OOK time-domain symbols

One OFDM time-domain symbol length

| CP | OOK | OOK | ... | OOK | ... | OOK |

M OOK time-domain symbols

**FIG. 4**

Frequency domain

One OFDM time-domain symbol length

| CP | OOK | OOK | ... | OOK |

M OOK time-domain symbols

| CP | OOK | OOK | ... | OOK |

M OOK time-domain symbols

Time domain

**FIG. 5**

FIG. 6

$Q_K=[\underbrace{S_0,S_0,\text{…} \ S_0}_{A} \ ,\underbrace{S_1,S_1,\text{…} \ S_1,\text{…}}_{A} \ \underbrace{S_{M-1},S_{M-1},\text{…} \ S_{M-1}}_{A}]$

| K point DFT/ FFT |

$D_K=[d_0,d_1,d_2,d_3,\text{…} \ ,d_{K-1}]$

Other data

⋮

$d_0$
$d_1$
⋮
$d_{K-1}$

⋮

Other data

| N point IDFT /IFFT |

$T_N=[t_0,t_1,t_2,t_3,\text{…} \ ,t_{N-1}]$

**FIG. 7**

| Expand each data element in the first data information into third data information of a length of a third value to obtain fourth data information of a length of a fourth value | S3000 |

| Repeat each data element in the fourth data information a fifth number of times to obtain fifth data information of a length of the fifth value, where the fifth value is less than or equal to the second value | S4000 |

**FIG. 8**

| Receive a first signal, where the first signal is generated based on a first-type time-domain symbol, and in the time domain, the first signal includes at least a first number of first-type time-domain symbols | S5000 |

**FIG. 9**

Processor 210

Memory 220

Communication device 200

**FIG. 10**

<table>
<tr><td colspan="2" align="center">**INTERNATIONAL SEARCH REPORT**</td><td>International application No.<br><br>**PCT/CN2023/110571**</td></tr>
</table>

| | |
|---|---|
| **A.** | **CLASSIFICATION OF SUBJECT MATTER** |
| | H04L 5/00(2006.01)i;  H04W 52/02(2009.01)i |

According to International Patent Classification (IPC) or to both national classification and IPC

| | |
|---|---|
| **B.** | **FIELDS SEARCHED** |

Minimum documentation searched (classification system followed by classification symbols)
    IPC:H04L,H04W

Documentation searched other than minimum documentation to the extent that such documents are included in the fields searched

Electronic data base consulted during the international search (name of data base and, where practicable, search terms used)
    CNABS, CNTXT, VEN, USTXT, EPTXT, WOTXT, CNKI, IEEE Explore: 唤醒信号, 符号, 对齐, 同步, OOK, WUS, OFDM, symbol, synchronization, alignment, frequency hopping

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 115883046 A (ZTE CORP.) 31 March 2023 (2023-03-31)<br>claims 1-35 | 1-35 |
| PX | WO 2023078358 A1 (HUAWEI TECHNOLOGIES CO., LTD.) 11 May 2023 (2023-05-11)<br>description, page 13, line 19-page 16, line 3 | 1-2, 20, 23-25, 34-35 |
| X | US 2022021494 A1 (SONY CORP.) 20 January 2022 (2022-01-20)<br>description, paragraphs [0044]-[0121], and figures 4-5 | 1-2, 20, 23-25, 34-35 |
| A | US 2014119410 A1 (QUALCOMM INC.) 01 May 2014 (2014-05-01)<br>entire document | 1-35 |
| A | US 2021297950 A1 (TELEFONAKTIEBOLAGET LM ERICSSON (PUBL)) 23 September 2021 (2021-09-23)<br>entire document | 1-35 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 September 2023** | **14 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT | International application No. |
| Information on patent family members | PCT/CN2023/110571 |

| Patent document cited in search report | | | Publication date (day/month/year) | Patent family member(s) | | | Publication date (day/month/year) |
|---|---|---|---|---|---|---|---|
| CN | 115883046 | A | 31 March 2023 | None | | | |
| WO | 2023078358 | A1 | 11 May 2023 | CN | 116073971 | A | 05 May 2023 |
| US | 2022021494 | A1 | 20 January 2022 | EP | 3804250 | A1 | 14 April 2021 |
| | | | | WO | 2019229266 | A1 | 05 December 2019 |
| US | 2014119410 | A1 | 01 May 2014 | US | 9787355 | B2 | 10 October 2017 |
| US | 2021297950 | A1 | 23 September 2021 | EP | 3821649 | A1 | 19 May 2021 |
| | | | | US | 11490332 | B2 | 01 November 2022 |
| | | | | ZA | 202100901 | B | 29 June 2022 |
| | | | | JP | 2021525048 | A | 16 September 2021 |
| | | | | JP | 7089107 | B2 | 21 June 2022 |
| | | | | BR | 112020026265 | A2 | 30 March 2021 |
| | | | | WO | 2020011365 | A1 | 16 January 2020 |
| | | | | KR | 20210025115 | A | 08 March 2021 |
| | | | | KR | 102401880 | B1 | 25 May 2022 |

Form PCT/ISA/210 (patent family annex) (July 2022)

## EP 4 546 694 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211380578